# EUROPEAN PATENT APPLICATION

(11) **EP 3 816 974 A1**
(43) Date of publication of application: **05.05.2021**
(21) Application number: 19826486.3
(22) Date of filing: 21.06.2019
(51) Int. Cl.: G09F 9/00, G02B 27/02, G09F 9/30, H01L 27/32, H01L 51/50, H04N 5/66, H05B 33/12, H05B 33/14

(54) **INFORMATION DISPLAY DEVICE AND INFORMATION DISPLAY SYSTEM**

(30) Priority: 26.06.2018 JP 2018121272
(71) Applicant: Kyocera Corporation, Kyoto-shi, Kyoto 612-8501 (JP)
(72) Inventor: KUSAFUKA Kaoru, Kyoto-shi, Kyoto 612-8501 (JP)
(74) Representative: Viering, Jentschura & Partner mbB Patent- und Rechtsanwälte
(86) International application number: PCT/JP2019/024703
(87) International publication number: WO 2020/004256

(57) **Abstract**

An information display device includes a light emitting panel, a shutter panel, and a controller. The light emitting panel includes a plurality of transmitting portions configured to transmit first light and a plurality of light emitting portions configured to emit second light. The transmitting portions and the light emitting portions are configured to be alternately arranged along a predetermined direction including a component in a direction in which a first eye and a second eye of a user are arranged. The shutter panel is configured to be positioned to be overlapped with the light emitting panel and includes a dimming region which is capable of operating so that the first light and the second light are reduced. The controller is capable of controlling the dimming region so that the first light enters the first eye and the second light enters the second eye.

## Description

### Cross-Reference to Related Application

This application claims priority to Japanese Patent Application No. 2018-121272, which was filed on June 26, 2018, the contents of which are incorporated herein by reference in its entirety.

### Technical Field

The present disclosure relates to an information display device and an information display system.

### Background Art

In the related art, a device that displays an image while the background is transmitted is known. This technique is described in, for example, Japanese Unexamined Patent Publication JP-A 2012-506604.

### Summary of Invention

According to one embodiment of the disclosure, an information display device includes a light emitting panel, a shutter panel, and a controller. The light emitting panel includes a plurality of transmitting portions configured to transmit first light and a plurality of light emitting portions configured to emit second light. The light emitting panel is configured so that the transmitting portions and the light emitting portions are alternately arranged along a predetermined direction including a component in a direction in which a first eye and a second eye of a user are arranged. The shutter panel is configured to be positioned to be overlapped with the light emitting panel and includes a dimming region which is capable of operating so that the first light and the second light are reduced. The controller is capable of controlling the dimming region so that the first light enters the first eye and the second light enters the second eye.

According to one embodiment of the disclosure, an information display system includes an information display device and a camera. The information display device includes a light emitting panel, a shutter panel, an acquisition unit, and a controller. The light emitting panel includes a plurality of transmitting portions configured to transmit first light and a plurality of light emitting portions configured to emit second light. The light emitting panel is configured so that the transmitting portions and the light emitting portions are alternately arranged along a predetermined direction including a component in a direction in which a first eye and a second eye of a user are arranged. The shutter panel is configured to be positioned to be overlapped with the light emitting panel and includes a dimming region which is capable of operating so that the first light and the second light are reduced. The acquisition unit is configured to acquire first position information relating to a position of the first eye and second position information relating to a position of the second eye. The controller is capable of controlling the dimming region so that the first light enters the first eye and the second light enters the second eye. The camera is capable of operating to output the first position information and the second position information to the acquisition unit.

### Brief Description of Drawings

FIG. 1 is a block diagram illustrating a configuration example of an information display system according to one embodiment;
FIG. 2 is a plan view illustrating a configuration example of an information display device according to one embodiment;
FIG. 3 is a cross-sectional view taken along the line A-A of FIG. 2;
FIG. 4 is a diagram illustrating an example of configurations of a light emitting panel and a shutter panel; and
FIG. 5 is a diagram illustrating another example of configurations of the light emitting panel and the shutter panel.

### Description of Embodiments

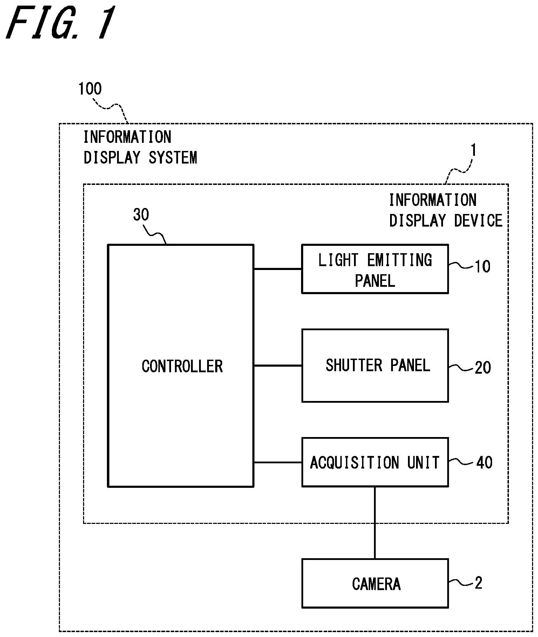

As illustrated in FIG. 1, an information display system 100 according to an embodiment includes an information display device 1 and a camera 2. The information display device 1 includes a light emitting panel 10, a shutter panel 20, and a controller 30. The information display device 1 may further include an acquisition unit 40. The acquisition unit 40 may be connected to the camera 2. In case of being connected to the camera 2, the acquisition unit 40 can acquire information from the camera 2.

The controller 30 is connected to each component of the information display device 1 and controls each component. For example, the controller 30 is configured as a processor. The controller 30 may include one or more processors. The processor may include a general-purpose processor that reads a specific program and executes a specific function, and a dedicated processor specialized for a specific process. The dedicated processor may include an application specific integrated circuit (ASIC). The processor may include a programmable logic device (PLD). The PLD may include a field-programmable gate array (FPGA). The controller 30 may be any one of a system-on-a-chip (SoC) and a system-in-a-package (SiP) in which one or a plurality of processors cooperate. The controller 30 includes a storage unit, and the storage unit may store various kinds of information, programs for operating each component of the information display device 1, and the like. The storage unit may be configured, for example, with a semiconductor memory. The storage unit may function as a work memory of the controller 30.

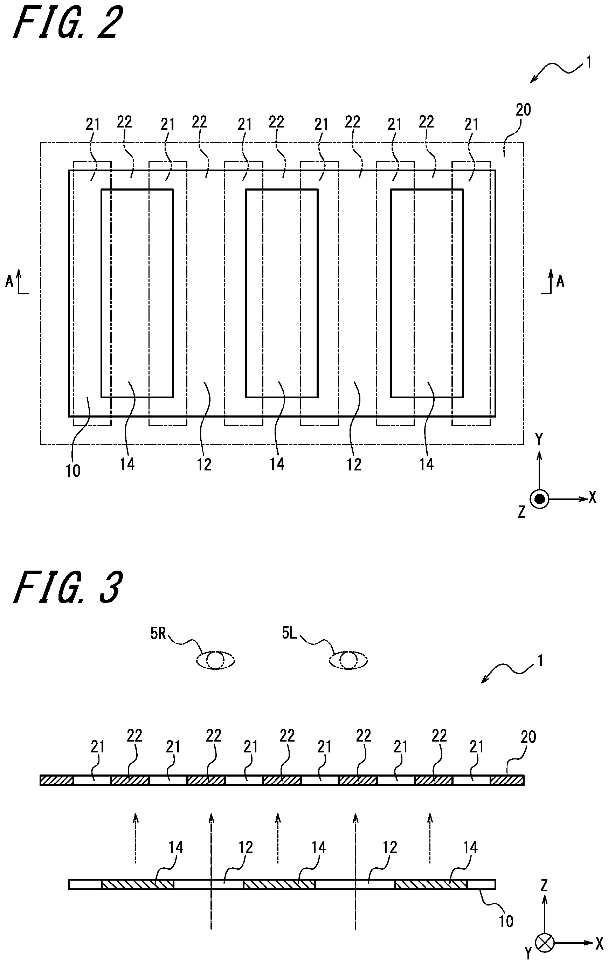

As illustrated in FIGS. 2 and 3, the light emitting panel 10 includes a plurality of transmitting portions 12 and a plurality of light emitting portions 14. The transmitting portions 12 are configured to transmit light incident from a background toward the light emitting panel 10 when seen from a user. The transmitting portions 12 are configured to transmit light incident from the background positioned on a side in a negative direction of the Z axis toward a left eye 5L and a right eye 5R of the user that are positioned on a side in a positive direction of the Z axis. The light incident from the background is also referred to as first light. In FIG. 3, the first light advances in a direction from the light emitting panel 10 to the left eye 5L and the right eye 5R of the user as illustrated with alternate long and short dash lines with arrows. The first light that transmits the transmitting portions 12 enters the eyes of the user, so that the user can visually recognize the background on a side toward the light emitting panel 10. The transmitting portions 12 may have a transmittance of a predetermined value or more. The transmitting portions 12 may include, for example, glass or a resin.

The light emitting portions 14 are configured to emit light for forming an image toward the left eye 5L and the right eye 5R of the user that are positioned on the side in the positive direction of the Z axis. The light for forming the image is also referred to as image light or second light. In FIG. 3, the second light advances in a direction from the light emitting panel 10 toward the left eye 5L and the right eye 5R of the user as illustrated with broken lines with arrows. The light emitting portions 14 cause the second light to enter the right eye 5R and the left eye 5L of the user. The second light enters the eyes, so that the user can visually recognize an image. The light emitting portions 14 may be an organic light emitting diode (OLED). The OLED may be a device that emits light by using an organic electro-luminescence (EL) phenomenon. In the case where the light emitting portions 14 are an OLED, the light emitting panel 10 including the transmitting portions 12 is also referred to as a transparent OLED. The light emitting portions 14 may include a self-luminous device such as an inorganic EL.

As illustrated in FIG. 3, the shutter panel 20 is configured to be overlapped with the light emitting panel 10 and positioned between the right eye 5R and the left eye 5L of the user and the light emitting panel 10. As illustrated in FIGS. 2 and 3, the shutter panel 20 includes a plurality of light transmitting regions 21 and a plurality of dimming regions 22. The light transmitting regions 21 can be operated to transmit the first light and the second light incident from the light emitting panel 10 side. The first light and the second light pass through the light transmitting regions 21 and reach the right eye 5R and the left eye 5L of the user. The dimming regions 22 can be operated to reduce the first light and the second light incident from the light emitting panel 10 side. The shutter panel 20 includes a plurality of elements that transition between a light transmitting state and a dimming state. The shutter panel 20 may be a liquid crystal shutter. The liquid crystal shutter can control the transmittance of the light according to the applied voltage. The liquid crystal shutter may be configured with a plurality of pixels and control the transmittance of the light in each pixel. The liquid crystal shutter can form a region with a high light transmittance and a region with a low light transmittance into any shapes. In the case where the shutter panel 20 is configured with a liquid crystal shutter, the light transmitting region 21 may be a region having the transmittance with a first predetermined value or more. For example, the first predetermined value may be 100% or may be a value close to 100%. In the case where the shutter panel 20 is configured with a liquid crystal shutter, the dimming region 22 may be a region having the transmittance of the second predetermined value or less. For example, the second predetermined value may be 0% or may be a value close to 0%. In the case where the first predetermined value is in a range in which a sufficient contrast with the light passing through the dimming regions 22 can be secured, the first predetermined value may be a value less than 50%, for example, 10%. In the case where the second predetermined value is in a range in which a sufficient contrast with the light passing through the light transmitting regions 21 can be secured, the second predetermined value may be a value more than about 0%, for example, 10%. The value of the sufficient contrast may be, for example, 100:1. The shutter panel 20 may be a MEMS panel in which a Micro Electro Mechanical System (MEMS) shutter is employed.

In the case where the user looks at the light emitting panel 10 via the shutter panel 20, the light emitting panel 10 includes regions visually recognized by the user via the light transmitting regions 21 and regions that are not or hardly visually recognized by the user due to the reduction of light by the dimming regions 22. The regions visually recognized by the user via the light transmitting regions 21 are also referred to as visible regions. The regions that are not or hardly visually recognized by the user due to the reduction of light by the dimming regions 22 are also referred to as non-visible regions. In the case where the visible regions include the transmitting portions 12, the user can visually recognize the first light emitted from portions included in the visible regions among the transmitting portions 12. In the case where the visible regions include the light emitting portions 14, the user can visually recognize the second light emitted from the portions included in the visible regions among the light emitting portions 14.

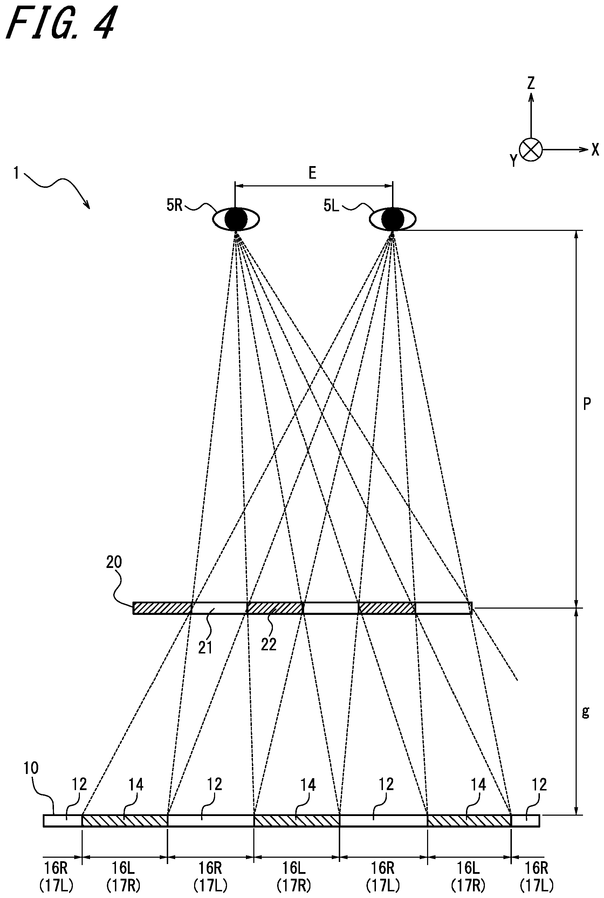

As exemplified in FIG. 4, each of the left eye 5L and the right eye 5R of the user visually recognizes a portion of the light emitting panel 10 and does not visually recognize or hardly visually recognizes the other portion of the light emitting panel 10. The region visually recognized by the left eye 5L of the user is also referred to as a left eye visible region 16L. The region visually recognized by the right eye 5R of the user is also referred to as a right eye visible region 16R. The left eye visible region 16L and the right eye visible region 16R can be different from each other. The region that is not or hardly visually recognized by the left eye 5L of the user is also referred to as a left eye non-visible region 17L. The region that is not or hardly visually recognized by the right eye 5R of the user is also referred to as a right eye non-visible region 17R. The left eye non-visible region 17L and the right eye non-visible region 17R can be different from each other.

One eye of the left eye 5L and the right eye 5R of the user is also referred to as a first eye. The other eye is also referred to as a second eye. The first eye is different from the second eye. The regions visually recognized by each of the first eye and the second eye are referred to as a first visible region and a second visible region. The regions that are not or hardly visually recognized by each of the first eye and the second eye are also referred to as the first non-visible region and the second non-visible region. For example, in the case where the first eye is the left eye 5L, the first visible region corresponds to the left eye visible region 16L.

In the present embodiment, the first eye and the second eye are arranged along the X axis direction. In the present embodiment, each of the light transmitting regions 21 and the dimming regions 22 has a band-like shape extending in the Y axis direction, and these regions are alternately arranged along the X axis direction. That is, the end line of the light transmitting region 21 is a straight line or a line segment extending along the Y axis direction. In the example of FIG. 4, the direction in which the light transmitting regions 21 and the dimming regions 22 are alternately arranged is identical to the direction in which the first eye and the second eye are arranged.

The end line of the light transmitting region 21 may also extend in a direction inclined at a predetermined angle with respect to the Y axis direction. The predetermined angle is an angle larger than 0 degrees and an angle smaller than 90 degrees. In this case, the direction in which the end line of the light transmitting region 21 extends intersects the direction in which the first eye and the second eye are arranged. In other words, the light transmitting regions 21 and the dimming regions 22 are configured to be alternately arranged in a predetermined direction including a component in the direction in which the first eye and the second eye of the user are arranged.

In the case where the direction in which the end line of the light transmitting region 21 extends intersects the direction in which the first eye and the second eye are arranged, the first visible region and the second visible region are not overlapped with each other in at least a portion thereof. In the information display device 1 according to the present embodiment, the direction in which the end line of the light transmitting region 21 extends intersects the direction in which the first eye and the second eye are arranged, so that the first visible region and the second visible region can be different from each other. In this case, the information display device 1 causes the first light passing through the transmitting portion 12 to reach the first eye of the user so that the background can be visually recognized, and causes the second light emitted from the light emitting portion 14 to reach the second eye so that the image can be visually recognized. By causing the light emitted from different distances to enter the first eye and the second eye, the user can focus on the light entering each of the first eye and the second eye. As a result, the user can visually recognize both of the background and the image.

As a comparative example, in the case where the direction extending to the end line of the light transmitting region 21 is identical to the direction in which the first eye and the second eye are arranged, the entire or large portions of the first visible region and the second visible region are overlapped with each other. As a result, both of the first light passing through the transmitting portions 12 and the second light passing through the light emitting portions 14 enter each of the first eye and the second eye of the user. In the case where both of the first light and the second light enter one eye, the user is hard to focus on the both of the light simultaneously. Accordingly, even if both of the first light and the second light enter one eye, it is difficult to visually recognize both of the background and the image with one eye.

In the case where the light transmitting region 21 and the dimming region 22 are arranged along the X axis direction, the left eye visible region 16L and the left eye non-visible region 17L are separated by a boundary and are alternately arranged in the X axis direction. The right eye visible region 16R and the right eye non-visible region 17R are separated by a boundary and are alternately arranged in the X axis direction. The position of the boundary is determined based on the position of the end line of the light transmitting region 21, a distance between the eyes of the user and the shutter panel 20, and a distance between the light emitting panel 10 and the shutter panel 20. The distance between the shutter panel 20 and the eyes of the user is also referred to as an observation distance and illustrated as P in FIG. 4. The distance between the light emitting panel 10 and the shutter panel 20 is also referred to as a gap and illustrated as g in FIG. 4.

The positions of the left eye visible region 16L and the right eye visible region 16R are determined based on not only the observation distance (P) and the gap (g) but also the positions of the left eye 5L and the right eye 5R of the user. In other words, the positional relationship between the left eye visible region 16L and the right eye visible region 16R are based on not only the observation distance (P) and the gap (g) but also the distance between the left eye 5L and the right eye 5R of the user. The distance between the left eye 5L and the right eye 5R of the user is referred to as an inter-eye distance and illustrated as E in FIG. 4.

In the case where the left eye visible region 16L is included in the right eye non-visible region 17R, the left eye visible region 16L is visually recognized by the left eye 5L of the user but is not or hardly visually recognized by the right eye 5R of the user. In the case where the right eye visible region 16R is included in the left eye non-visible region 17L, the right eye visible region 16R is visually recognized by the right eye 5R of the user but is not or hardly visually recognized by the left eye 5L of the user. In the case where the left eye visible region 16L is included in the right eye non-visible region 17R, and the right eye visible region 16R is included in the left eye non-visible region 17L, it can be said that the left eye visible region 16L and the right eye visible region 16R are not overlapped with each other . In the example of FIG. 4, the left eye visible region 16L and the right eye visible region 16R are not overlapped with each other.

In the example of FIG. 4, the left eye visible region 16L and the right eye non-visible region 17R are identical to each other, and the right eye visible region 16R and the left eye non-visible region 17L are identical to each other. In other words, the left eye visible region 16L and the right eye visible region 16R are adjacent to each other. Further, the left eye visible region 16L and the right eye visible region 16R are respectively identical to the region of the light emitting portion 14 and the region of the transmitting portion 12. In this case, the user only visually recognizes the light emitting portion 14 by the left eye 5L and only visually recognizes the transmitting portion 12 by the right eye 5R.

The controller 30 can control the position or shape of each of the light transmitting region 21 and the dimming region 22 of the shutter panel 20. That is, the controller 30 can control the position or shape of the end line of the light transmitting region 21. The controller 30 can control the position or shape of the light transmitting region 21 or the position or shape of the end line of the light transmitting region 21 by controlling the position or the shape of the dimming region 22. The controller 30 can control the position or shape of each of the visible region and the non-visible region by controlling the position or shape of each of the light transmitting region 21 and the dimming region 22.

The controller 30 can cause the left eye visible region 16L and the right eye non-visible region 17R to be identical to each other and also can cause the right eye visible region 16R and the left eye non-visible region 17L to be identical to each other by controlling the position or the shape of each of the light transmitting region 21 and the dimming region 22. The position and shape of each of the transmitting portion 12 and the light emitting portion 14 in the light emitting panel 10 are fixed. That is, the controller 30 cannot control the shape and position of each of the transmitting portion 12 and the light emitting portion 14. The controller 30 may control the dimming region 22 of the shutter panel 20 based on the shape and position of each of the transmitting portion 12 and the light emitting portion 14.

In the case where the observation distance (P) is the predetermined distance, it is assumed that the controller 30 enables the left eye visible region 16L and the right eye visible region 16R to be identical to the region of the light emitting portion 14 and the region of the transmitting portion 12. The predetermined distance in this case is also referred to as an optimal viewing distance (OVD). In the case where the observation distance (P) is different from the OVD, the controller 30 may not be able to enable the left eye visible region 16L and the right eye visible region 16R to be identical to the region of the light emitting portion 14 and the region of the transmitting portion 12 in some cases. Even if the controller 30 controls the position or shape of each of the light transmitting region 21 and the dimming region 22, the visible region may not be identical to the region of the transmitting portion 12 or the region of the light emitting portion 14.

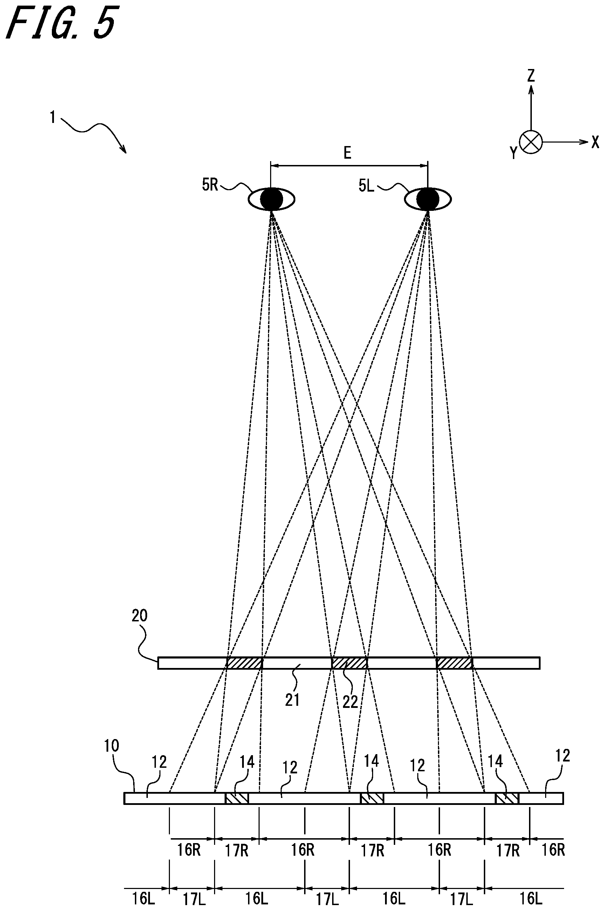

In the case where the observation distance (P) is different from the OVD, the controller 30 may control the dimming region 22 of the shutter panel 20 so that the second light does not enter the first eye. For example, as illustrated in FIG. 5, the controller 30 may include the light emitting portion 14 in the right eye non-visible region 17R so that the second light does not enter the right eye 5R. In this manner, the first light and the second light do not simultaneously enter the first eye of the user. As a result, the user only needs to focus on the first light with the first eye, which makes it easier to visually recognize the background.

In the case where the first light and the second light simultaneously enter one eye, in view of the fact that the second light is emitted from the position closer than the first light, and the brightness of the second light can be higher than the brightness of the first light, it can be said that the eye makes it easier to focus on the second light. That is, even if the first light and the second light enter the second eye, the user can visually recognize the image by the second eye. Accordingly, the controller 30 may control the dimming region 22 of the shutter panel 20 so that at least a portion of the first light enters the second eye. For example, as illustrated in FIG. 5, the controller 30 may cause the left eye visible region 16L to include the transmitting portion 12 and the light emitting portion 14 so that the first light and the second light enter the left eye 5L. In this manner, the proportion of the light transmitting regions 21 of the shutter panel 20 can be great, and also the restriction on the position or shape of the dimming region 22 can be reduced.

The controller 30 may control the dimming region 22 of the shutter panel 20 based on the shape and position of the light emitting portion 14 in the light emitting panel 10. That is, the controller 30 may control the position of the dimming region 22 in the shutter panel 20, based on a second light emitting position in the light emitting panel 10 so that the second light does not enter the first eye. The controller 30 may control an area where the dimming regions 22 expand in the shutter panel 20, based on a second light emitting region in the light emitting panel 10.

In the light emitting panel 10, an area occupied by the light emitting portions 14 may be equal to or less than an area occupied by the transmitting portions 12. That is, a proportion of the area occupied by the light emitting portions 14 with respect to an area of the entire light emitting panel 10 may be 50% or less. In the case where the proportion of the area occupied by the light emitting portions 14 is 50% or less, the information display device 1 easily controls the dimming region 22 of the shutter panel 20 so that the second light emitted from the light emitting portions 14 enters the second eye and does not enter the first eye. In this case, a proportion of an area occupied by the light transmitting regions 21 in shutter panel 20 can be expanded. The information display device 1 can increase the intensity of the light that passes through the shutter panel 20 by expanding the light transmitting regions 21. As a result, the information display device 1 easily causes the user to visually recognize the background and the image.

Even if the proportion of the area occupied by the light emitting portions 14 with respect to the area of the entire light emitting panel 10 exceeds 50%, the information display device 1 can cause the second light to hardly enter the first eye by expanding an area of the dimming regions 22 of the shutter panel 20.

The controller 30 may control the dimming regions 22 of the shutter panel 20, based on the information relating to the position of each of the left eye 5L and the right eye 5R of the user. The controller 30 may cause the acquisition unit 40 to acquire the information relating to the position of each of the left eye 5L and the right eye 5R of the user. The information relating to the position of the first eye of the user is also referred to as first position information. The information relating to the position of the second eye of user is also referred to as the second position information. That is, the controller 30 may cause the acquisition unit 40 to acquire the first position information and the second position information and may control the dimming regions 22 of the shutter panel 20, based on the first position information and the second position information.

The acquisition unit 40 is configured to acquire the information relating to the position of at least one of the left eye 5L and the right eye 5R of the user and output the information to the controller 30. The acquisition unit 40 may acquire the information relating to the position of each of the left eye 5L and the right eye 5R of the use. In the case where the acquisition unit 40 is connected to the camera 2, the information relating to the position of the left eye 5L or the right eye 5R of the user may be acquired from the camera 2.

The camera 2 may detect the position of at least one of the left eye 5L and the right eye 5R of the user and output the information relating to the position. The camera 2 may capture the face of the user and detect the position of at least one of the left eye 5L and the right eye 5R based on the captured image. The camera 2 may detect the position of at least one of the left eye 5L and the right eye 5R, based on the captured image as the coordinates of the three-dimensional space. The camera 2 may include a plurality of imaging elements. The camera 2 may detect the position of at least one of the left eye 5L and the right eye 5R, based on the captured image of each imaging element as coordinates of a three-dimensional space.

The acquisition unit 40 may include the camera 2, or may be connected to the camera 2 provided as a configuration separate from the information display device 1. The acquisition unit 40 may include an input terminal for inputting a signal from the camera 2. The camera 2 may be directly connected to the input terminal. The camera 2 may be indirectly connected to the input terminal via a shared network. In the case where the camera 2 is not included, the acquisition unit 40 not including the camera 2 may include an input terminal for receiving an input of a video signal from the camera 2. In the case where the camera 2 is not included, the acquisition unit 40 may detect the position of at least one of the left eye 5L and the right eye 5R from the video signal input to the input terminal.

For example, the acquisition unit 40 may include a sensor. The sensor may be an ultrasonic sensor, a light sensor, or the like. The acquisition unit 40 may detect the position of the head of the user by the sensor and detect the position of at least one of the left eye 5L and the right eye 5R, based on the position of the head. By one or more sensors, the acquisition unit 40 may detect the position of at least one of the left eye 5L and the right eye 5R as the coordinates of the three-dimensional space.

The acquisition unit 40 calculates the distance between the left eye 5L and the right eye 5R and the shutter panel 20 as the observation distance (P), based on the detection result of the position of at least one of the left eye 5L and the right eye 5R. The acquisition unit 40 can calculate the difference between the coordinates of the left eye 5L and the right eye 5R in the Z axis direction and the coordinates of the shutter panel 20 in the Z axis direction as the observation distance (P). The acquisition unit 40 may calculate the inter-eye distance (E), based on the detection result of the position of each of the left eye 5L and the right eye 5R.

The information display device 1 may not include the acquisition unit 40. In the case where the information display device 1 does not include the acquisition unit 40, the controller 30 may include an input terminal that is provided outside the device and receives an input of a signal from a detection device of the positions of the eyes of the user. The detection device outside the device may be connected to the input terminal. The detection device outside the device may use an electric signal and a light signal as a transmission signal to the input terminal. The detection device outside the device may be indirectly connected to the input terminal via a shared network.

By the controller 30 controlling the shutter panel 20 based on the information relating to the positions of the eyes of the user, the user easily visually recognizes the background and the image simultaneously.

The controller 30 may control the shutter panel 20 in an assumption that the user is at a predetermined position with respect to the information display device 1. In this case, the user may move relatively to the information display device 1 so as to easily visually recognize the background seen beyond the transmitting portions 12 and the image configured with the light emitted from the light emitting portions 14, simultaneously.

As a device according to a comparative example, assumed is a device configured to include the light emitting panel 10 including the transmitting portions 12 and the light emitting portions 14 but not include the shutter panel 20. In the case where the user looks at the device according to the comparative example, both of the first light passing through the transmitting portions 12 and the second light emitted from the light emitting portions 14 enter the eyes of the left eye 5L and the right eye 5R of the user. In the case where both of the first light and the second light enter one eye, the user hardly focuses on both of the light simultaneously. For example, in the case where the light emitting portions 14 emit light with the relatively low brightness, the eyes easily focus on the background, but hardly focus on the light emitting portions 14 or hardly visually recognize the image with the low brightness. Meanwhile, in the case where the light emitting portions 14 emit light with the relatively high brightness, the eyes easily focus on the light emitting portions 14 but hardly focus on the background. Therefore, even if both of the first light and the second light enter one eye, it is difficult to visually recognize both of the background and the image by one eye.

Meanwhile, the information display device 1 according to the present embodiment includes the shutter panel 20 including the light transmitting regions 21 and the dimming regions 22. The shutter panel 20 can operate so that the light passing through the transmitting portions 12 is visually recognized by one eye of the left eye 5L and the right eye 5R of the user and the light emitted from the light emitting portions 14 is visually recognized with the other eye. In this manner, the user can focus on the background with one eye and focus on the light emitting portions 14 with the other eye. As a result, the user can visually recognize the background passing through the transmitting portions 12 and the image relating to the light emitted from the light emitting portions 14, simultaneously. That is, the image is seen by the user to be overlapped with the background.

In the case where the light emitting portions 14 are included in the first visible region controlled so that the second light does not enter the first eye, the controller 15 can reduce the light emission of the light emitting portions 14. The controller 15 can reduce the visual recognition of the light emitting portions 14 by the first eye by reducing the light emission by the light emitting portions 14 included in the first visible region.

The configuration according to the disclosure is not limited only to the embodiment described above, and various modifications and changes can be made. For example, the functions included in each component and the like can be rearranged without logically inconsistency, and a plurality of components and the like can be combined into one or separated.

The diagram illustrating the configuration according to the disclosure is schematic. The dimensional ratios on the drawings do not always match the actual ones.

In the disclosure, the descriptions such as "first" and "second" are identifiers for distinguishing the configuration. The configurations distinguished by the descriptions such as "first" and "second" in the disclosure can exchange numbers in the relevant configurations. For example, "first" of the first light can be exchanged with "second" of the second light. The exchange of the identifiers can be performed simultaneously. After the exchange of the identifiers, the configuration is distinguished. The identifier may be deleted. The configuration with the identifier removed is distinguished by a reference numeral. The description of the identifiers such as "first" and "second" in the disclosure should not be used merely as a basis for interpretation of the order of the configurations or the existence of identifiers with smaller numbers.

In the disclosure, the X axis, the Y axis, and the Z axis are provided for convenience of explanation and may be interchanged with each other. The configurations according to the disclosure are described using a Cartesian coordinate system composed of the X axis, the Y axis, and the Z axis. The positional relationship of each configuration in the disclosure is not limited to an orthogonal relationship.

### Reference Signs List

- 1:: Information display device
- 2:: Camera
- 5L:: Left eye
- 5R:: Right eye
- 10:: Light emitting panel
- 12:: Transmitting portion
- 14:: Light emitting portion
- 16L:: Left eye visible region
- 16R:: Right eye visible region
- 17L:: Left eye non-visible region
- 17R:: Right eye non-visible region
- 20:: Shutter panel
- 21:: Light transmitting region
- 22:: Dimming region
- 30:: Controller
- 40:: Acquisition unit
- 100:: Information display system

## Claims

1. An information display device, comprising:
a light emitting panel comprising a plurality of transmitting portions configured to transmit first light and a plurality of light emitting portions configured to emit second light, the light emitting panel being configured so that the transmitting portions and the light emitting portions are alternately arranged in a predetermined direction comprising a component in a direction in which a first eye and a second eye of a user are arranged;
a shutter panel configured to be positioned to be overlapped with the light emitting panel, the shutter panel comprising a dimming region which is capable of operating so that the first light and the second light are reduced; and
a controller which is capable of controlling the dimming region so that the first light enters the first eye and the second light enters the second eye.

2. The information display device according to claim 1,
wherein the controller is capable of controlling the dimming region so that the second light does not enter the first eye.

3. The information display device according to claim 1 or 2,
wherein the controller is capable of controlling the dimming region so that at least a portion of the first light enters the second eye.

4. The information display device according to any one of claims 1 to 3,
wherein the controller is capable of controlling a position of the dimming region, based on a second light emitting position in the light emitting panel.

5. The information display device according to any one of claims 1 to 4,
wherein the controller is capable of controlling an area of the dimming region, based on a second light emitting region in the light emitting panel.

6. The information display device according to any one of claims 1 to 5, further comprising:
an acquisition unit configured to acquire first position information relating to a position of the first eye and second position information relating to a position of the second eye,
wherein the controller is capable of controlling the dimming region, based on the first position information and the second position information.

7. An information display system, comprising:
an information display device comprising
a light emitting panel comprising a plurality of transmitting portions configured to transmit first light and a plurality of light emitting portions configured to emit second light, the light emitting panel being configured so that the transmitting portions and the light emitting portions are alternately arranged in a predetermined direction comprising a component in a direction in which a first eye and a second eye of the user are arranged,
a shutter panel configured to be positioned to be overlapped with the light emitting panel, the shutter panel comprising a dimming region which is capable of operating so that the first light and the second light are reduced,
an acquisition unit configured to acquire first position information relating to a position of the first eye and second position information relating to a position of the second eye, and
a controller which is capable of controlling the dimming region so that the first light enters the first eye and the second light enters the second eye, based on the first position information and the second position information; and
a camera which is capable of operating to output the first position information and the second position information to the acquisition unit.

8. The information display system according to claim 7,
wherein the controller is capable of controlling the dimming region so that the second light does not enter the first eye.

9. The information display system according to claim 7 or 8,
wherein the controller is capable of controlling the dimming region so that at least a portion of the first light enters the second eye.

10. The information display system according to any one of claims 7 to 9,
wherein the controller is capable of controlling a position of the dimming region, based on a second light emitting position in the light emitting panel.

11. The information display system according to any one of claims 7 to 10,
wherein the controller is capable of controlling an area of the dimming region, based on a second light emitting region in the light emitting panel.
